(19) Europäisches Patentamt
European Patent Office
Office européen des brevets

(11) **EP 2 747 266 B1**

(12) **FASCICULE DE BREVET EUROPEEN**

(45) Date de publication et mention
de la délivrance du brevet:
**22.08.2018 Bulletin 2018/34**

(51) Int Cl.:
*H02M 3/158* (2006.01)     *H02M 7/48* (2007.01)
*H02M 1/00* (2006.01)

(21) Numéro de dépôt: **13195431.5**

(22) Date de dépôt: **03.12.2013**

(54) **Système d'alimentation à découpage et aéronef comprenant un tel système**

Stromzuführungssystem mit Partitionierung, und ein solches System umfassendes Luftfahrzeug

Switching power supply system and aircraft including such a system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2012 FR 1203580**

(43) Date de publication de la demande:
**25.06.2014 Bulletin 2014/26**

(73) Titulaire: **Thales**
**92200 Neuilly Sur Seine (FR)**

(72) Inventeurs:
• **Lagorce, Vivien**
**26027 VALENCE CEDEX (FR)**

• **Taurand, Christophe**
**26027 VALENCE CEDEX (FR)**
• **Klein, François**
**26027 VALENCE CEDEX (FR)**

(74) Mandataire: **Lavoix**
**2, place d'Estienne d'Orves**
**75441 Paris Cedex 09 (FR)**

(56) Documents cités:
**US-A- 5 568 368    US-A- 5 594 635**
**US-A- 5 717 584    US-A1- 2005 036 345**

## Description

La présente invention concerne un système d'alimentation à découpage.

Plus particulièrement, l'invention concerne un système d'alimentation électrique destiné à être raccordé en entrée à une source d'énergie électrique et en sortie à une charge, comprenant :

- une cellule de commutation principale comprenant une première branche principale et une deuxième branche principale comportant chacune un interrupteur principal commandable entre un état ouvert et un état fermé, et
- une cellule d'aide à la commutation raccordée à la cellule de commutation principale et comprenant d'un part une première branche secondaire et une deuxième branche secondaire chacune comportant un interrupteur secondaire commandable entre un état ouvert et un état fermé, et d'autre part une branche de raccordement pour le raccordement de la cellule d'aide à la commutation à la cellule de commutation principale, la branche de raccordement comportant une bobine de commutation, la cellule de commutation principale et la cellule d'aide à la commutation étant connectées en cascade l'une de l'autre.

Ce type de systèmes d'alimentation électrique équipe notamment les aéronefs et est utilisé pour alimenter en énergie électrique des équipements électroniques.

Un tel système est par exemple décrit dans le document « A Novel Two-quadrant Zero-Voltage transition Converter for DC Motor Drives », dans lequel le système d'alimentation est raccordé en sortie à un moteur de traction et dans les documents US 5 568 368 et US 5 594 635.

Le principe de fonctionnement de ces systèmes d'alimentation repose sur la commutation des interrupteurs de la cellule de commutation principale pour la régulation de la puissance électrique délivrée par le système d'alimentation.

Au cours du fonctionnement de ces systèmes d'alimentation, plusieurs éléments engendrent des pertes d'énergie électrique.

Les interrupteurs inclus dans ces systèmes et commandés à l'ouverture et à la fermeture pour la régulation de la puissance électrique délivrée, génèrent des pertes d'énergie électrique de deux types :

- les pertes statiques, qui sont liées à la performance des interrupteurs en conduction et ne peuvent pas être diminuées par des modifications de topologie du système d'alimentation, et
- les pertes dynamiques, ou pertes par commutation, qui sont liées au courant traversant les interrupteurs et à la tension à leurs bornes lors de leur ouverture et de leur fermeture, ainsi qu'à la durée de leur commutation.

Dans le document précité, afin de réduire les pertes dynamiques, les interrupteurs de la cellule d'aide à la commutation sont commandés à l'ouverture et à la fermeture via des lois de commande spécifiques de sorte que la commutation des interrupteurs de la cellule de commutation principale engendre moins de pertes.

Toutefois, la solution envisagée ne donne pas entière satisfaction.

En effet, dans ce système, la commande des interrupteurs principaux et secondaires est réalisée au moyen de deux lois de commandes distinctes en fonction du mode de fonctionnement du moteur de traction raccordé à la sortie du système d'alimentation: une première loi de commande régit le contrôle des interrupteurs lorsque le moteur se comporte comme une charge, et une deuxième loi de commande régit le contrôle des interrupteurs lorsque le moteur se comporte comme un générateur.

La commande des interrupteurs de ce système est donc particulièrement complexe.

En outre, les diodes intrinsèques des interrupteurs sont utilisées pour conduire le courant de charge associé à l'interrupteur utilisé pour engendrer une résonance de tension aux bornes des interrupteurs de la cellule de commutation principale.

Ceci entraîne d'importantes pertes par conduction dans les diodes du fait du passage du courant, mais aussi d'importantes pertes par conduction dans les interrupteurs, ces pertes étant liées au courant de recouvrement des diodes.

Enfin, les interrupteurs de la cellule d'aide à la commutation sont commandés pour commuter à courant nul et ce seulement à l'ouverture. Le système décrit ne limite alors pas les pertes engendrées par la décharge de condensateurs parasites des interrupteurs secondaires.

L'objet de l'invention est donc de proposer un système d'alimentation permettant de réduire les pertes d'énergie électrique.

A cet effet, l'invention concerne un système d'alimentation électrique selon la revendication 1.

Selon d'autres aspects avantageux de l'invention, le système d'alimentation comprend une ou plusieurs des caractéristiques optionnelles des revendications 2 à 12.

En outre, l'invention concerne un aéronef comprenant au moins un système d'alimentation électrique tel que décrit ci-dessus.

L'invention sera mieux comprise à la lecture de la description détaillée qui va suivre, donnée uniquement à titre d'exemple non limitatif et faite en référence aux Figures annexées, sur lesquelles :

- la Figure 1 est une représentation schématique d'un aéronef selon l'invention ;
- la Figure 2 est une représentation schématique d'un système d'alimentation selon l'invention ;
- la Figure 3 est une représentation schématique du principe de commande d'une cellule de commutation principale du système d'alimentation de la Figure 2 ;
- la Figure 4 est une représentation schématique du principe de commande d'une cellule d'aide à la commutation du système d'alimentation de la Figure 2 ;
- la Figure 5 est une représentation schématique de la variation en fonction du temps des principales grandeurs du système d'alimentation de la Figure 2 ;
- les Figures 6 à 14 sont des représentations schématiques du fonctionnement du système d'alimentation de la Figure 2 au cours de périodes successives de la Figure 5 ;
- la Figure 15 est une représentation schématique d'un système d'alimentation selon une première variante de l'invention :
- la Figure 16 est une représentation schématique d'un système d'alimentation selon une deuxième variante de l'invention ; et
- la Figure 17 est une représentation schématique d'un système d'alimentation selon une troisième variante de l'invention.

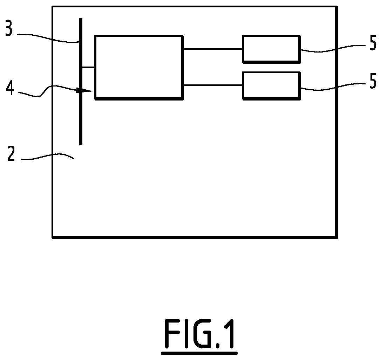

La Figure 1 illustre un aéronef 2 selon l'invention.

L'aéronef 2 comprend un réseau électrique 3 et un système 4 d'alimentation de charges électriques 5.

Le réseau 3 est par exemple un réseau de tension continue.

Le système 4 est propre à recevoir une tension d'entrée Ve continue et est propre à délivrer en sortie une tension de sortie Vs continue ou alternative.

Le système 4 est propre à fournir en sortie une puissance électrique régulée, la régulation étant effectuée en courant ou en tension. Dans ce dernier cas, la tension de sortie Vs est asservie à une tension de consigne.

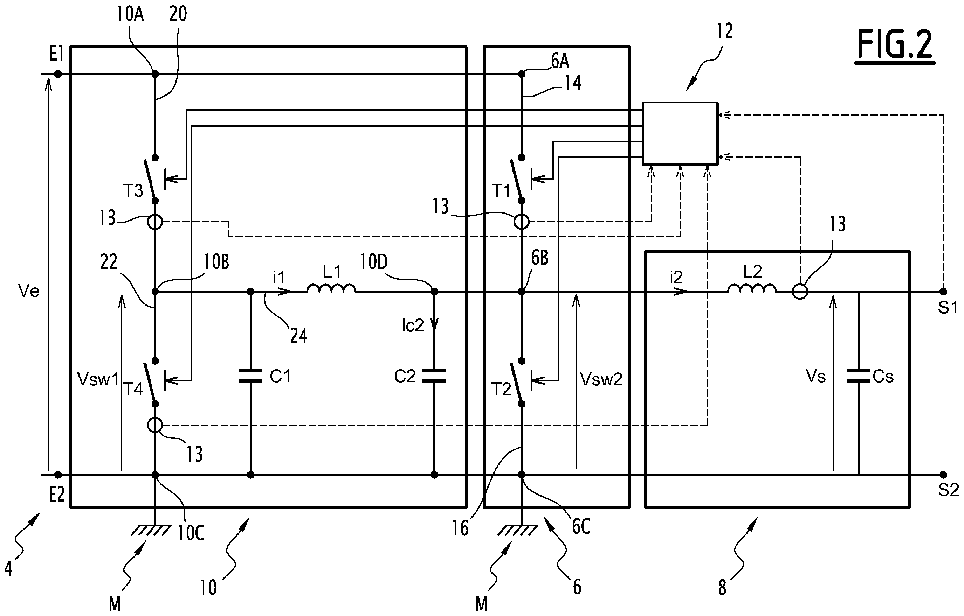

En référence à la Figure 2, le système 4 comprend une cellule de commutation principale 6, ci-après cellule principale 6, ainsi qu'un filtre de sortie 8, ci-après filtre 8.

Le système 4 comprend en outre une cellule d'aide à la commutation 10, ci-après cellule d'aide 10, ainsi que des moyens de commande 12.

Par ailleurs, le système 4 comprend des capteurs de courant 13.

En outre, le système 4 comprend deux bornes d'entrée E1, E2 dont une borne positive E1 et une borne négative E2, et deux bornes de sortie S1, S2 dont une borne positive S1 et une borne négative S2.

Les charges 5 sont par exemples différents équipements électroniques embarqués à bord de l'aéronef 2.

La cellule principale 6 est propre à délivrer un courant de bobine noté $i_2$ au filtre de sortie 8.

Conjointement au filtre de sortie 8, la cellule principale 6 est propre à assurer la régulation de la tension de sortie Vs lorsque le système 4 est asservi en tension, ainsi qu'à assurer la régulation du courant de bobine $i_2$ lorsque le système 4 est asservi en courant.

La cellule principale 6 comprend trois points électriques 6A, 6B, 6C délimitant une première et une deuxième branches 14, 16 de la cellule principale 6, ci-après branches principales 14, 16.

Les points électriques 6A, 6B, 6C sont adaptés pour la connexion de la cellule principale 6 aux autres éléments du système 4 et au réseau d'alimentation, notamment pour la connexion de la cellule principale 6 en cascade de la cellule d'aide 10. Ceci est décrit plus en détail par la suite.

Le premier point électrique 6A et le deuxième point électrique 6B délimitent la première branche principale 14. La première branche principale 14 comprend un interrupteur principal T1.

Le deuxième point électrique 6B et le troisième point électrique 6C délimitent la deuxième branche principale 16. La deuxième branche principale 16 comporte un interrupteur principal T2. La deuxième branche principale 16 est connectée à une masse électrique M via le troisième point électrique 6C.

Le deuxième point électrique 6B est également connecté à l'entrée du filtre de sortie 8, qui se trouve en aval de la cellule principale 6 selon le sens de circulation du courant depuis l'entrée du système 4 vers la sortie.

Les interrupteurs T1, T2 sont par exemple des transistors à effet de champ de type MOSFET (de l'anglais Metal Oxide Semiconductor Field Effect Transistor).

La tension aux bornes de l'interrupteur T2 de la deuxième branche principale 16 est notée Vsw2 dans ce qui suit.

Le filtre 8 est propre à filtrer le courant et la tension délivrés en sortie du système 4.

Le filtre 8 est par exemple un filtre LC. Il comprend une bobine de filtrage L2 traversée par le courant de bobine $i_2$ et un condensateur de sortie Cs présentant une tension entre ses bornes notée Vs.

Le condensateur de sortie Cs est connecté aux bornes de sortie S1, S2 et la bobine de filtrage L2 est connectée au deuxième point électrique 6B de la cellule principale 6 et à la borne de sortie S1.

Dans l'exemple de la Figure 2, la cellule principale 6 et le filtre de sortie 8 forment un convertisseur abaisseur de tension, également connu sous le nom anglophone de convertisseur Buck.

La cellule d'aide 10 comprend quatre points électriques 10A, 10B, 10C, 10D délimitant trois branches 20, 22, 24 de la cellule d'aide 10. En outre, la cellule d'aide 10 comprend deux condensateurs de commutation C1, C2, ci-après condensateurs C1, C2.

Les points électriques 10A à 10D sont adaptés pour la connexion de la cellule d'aide 10 à la cellule principale 6 et aux autres éléments du système 4 et/ou au réseau d'alimentation 3, et notamment pour la connexion de la cellule principale 6 en cascade de la cellule d'aide 10.

Plus spécifiquement, la cellule d'aide 10 comprend un quatrième et un cinquième points électriques 10A et 10B respectivement, qui délimitent une première branche secondaire 20 comportant un interrupteur secondaire T3, ci-après interrupteur T3.

La cellule d'aide 10 comprend un sixième point électrique 10C qui, conjointement au cinquième point électrique 10B, délimite une deuxième branche secondaire 22 comportant également un interrupteur secondaire T4, ci-après interrupteur T4. La deuxième branche secondaire 22 est connectée à la masse M via le sixième point électrique 10C.

La cellule d'aide 10 comprend en outre un septième point électrique 10D qui, conjointement au cinquième point secondaire 10B, délimite une branche de raccordement 24 comportant une bobine de commutation L1. Le septième point électrique 10D correspond à la borne de sortie de la bobine de commutation L1.

La cellule d'aide 10 est disposée à l'entrée du système 4, le quatrième point électrique 10A correspondant à la borne d'entrée E1 ou y étant connecté directement, le sixième point électrique 10C correspondant à la borne d'entrée E2 ou y étant directement connecté.

La cellule principale 6 et la cellule d'aide 10 sont connectées en cascade l'une de l'autre.

Plus spécifiquement, dans le mode de réalisation de la Figure 2, le quatrième point électrique 10A est raccordé au premier point électrique 6A via une liaison électrique.

Le sixième point électrique 10C est raccordé au troisième point électrique 6C via une liaison électrique.

La branche de raccordement 24 est connectée au deuxième point électrique 6B directement ou via une liaison électrique.

En outre, l'un des condensateurs C1, C2 de la cellule d'aide 10 est disposé en parallèle d'un interrupteur principal T1, T2 et l'autre condensateur C1, C2 est disposé en parallèle d'un interrupteur secondaire T3, T4.

Dans l'exemple de la Figure 2, le condensateur C1 est disposé en parallèle de l'interrupteur T4, et le condensateur C2 est disposé en parallèle de l'interrupteur T2.

Les condensateurs C1, C2 sont des condensateurs dédiés distincts des condensateurs intrinsèques des interrupteurs en parallèle desquels ils sont disposés.

A noter qu'en pratique, les condensateurs intrinsèques des interrupteurs, ces condensateurs présentant chacun une capacité, également appelée « capacité parasite », contribuent à la valeur de la capacité des condensateurs C1, C2, ce qui permet de minimiser la taille des condensateurs C1, C2.

La bobine de commutation L1 est traversée par un courant d'aide à la commutation noté $i_1$. Le courant d'aide à la commutation $i_1$ est alternatif, de forme sinusoïdale, de valeur maximale i1_max positive et de valeur minimale i1_min négative.

La cellule d'aide 10 est propre à réduire, via la commande des moyens de commande 12, les pertes par commutation dans les interrupteurs T1, T2, ainsi qu'à limiter les pertes par commutation dans les interrupteurs secondaires T3, T4. Ceci est décrit plus en détail dans ce qui suit.

Les interrupteurs T3, T4 sont également des transistors à effet de champ de type MOSFET.

La tension aux bornes de l'interrupteur secondaire T4 de la deuxième branche secondaire 22 est notée Vsw1 dans ce qui suit.

Les moyens de commande 12 sont configurés pour réaliser l'asservissement en tension du système 4 en fonction de la tension de sortie Vs, ou l'asservissement en courant du système 4 en fonction du courant de bobine $i_2$, et ce en commandant l'ouverture et la fermeture des interrupteurs T1 à T4 de façon à ce que la tension aux bornes et/ou le courant traversant les interrupteurs soient faibles voire nuls lors de leur commutation.

Plus spécifiquement, les moyens de commande 12 sont propres à commander les interrupteurs principaux T1 et T2 en opposition de phase l'un de l'autre, c'est-à-dire de sorte que ces interrupteurs ne soient jamais fermés tous les deux à un instant donné, et les interrupteurs secondaires T3, T4 en opposition de phase l'un de l'autre.

Par ailleurs, les moyens de commande 12 sont configurés pour réaliser l'ouverture de l'interrupteur T3 lorsque le courant d'aide à la commutation $i_1$ devient supérieur à un premier seuil de courant i1_th_pos de valeur positive, et l'ouverture de l'interrupteur T4 lorsque le courant d'aide à la commutation $i_1$ devient inférieur à un deuxième seuil de courant i1_th_neg de valeur négative. A noter que ces conditions ne sont pas suffisantes pour l'ouverture des interrupteurs T3 et T4. Le détail de la commande de ces interrupteurs est donné ci-après.

La valeur précise des seuils de courant i1_th_pos et i1_th_neg est fonction du mode d'asservissement du système 4, ainsi que des condensateurs C1, C2, Cs et des bobines L1 et L2. La détermination des seuils de courant i1_th_pos et i1_th_neg est décrite plus en détail par la suite.

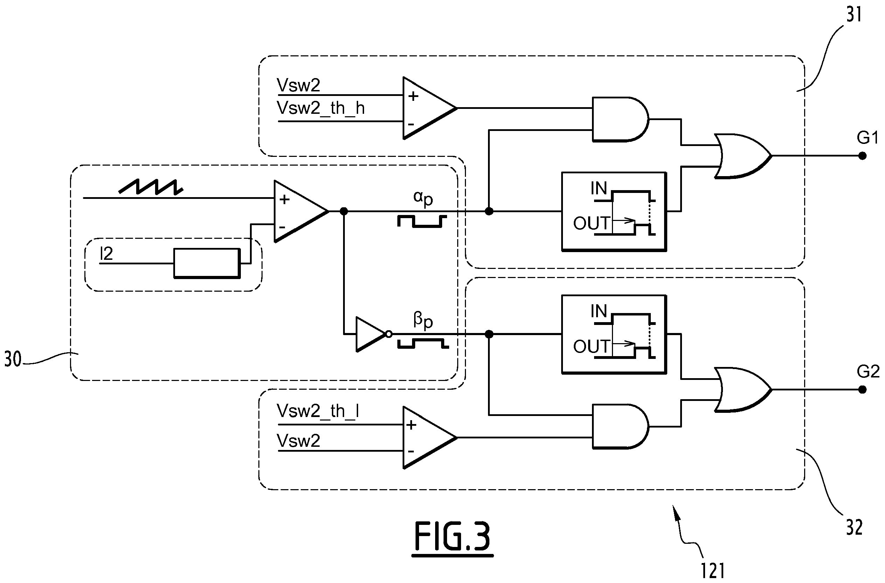

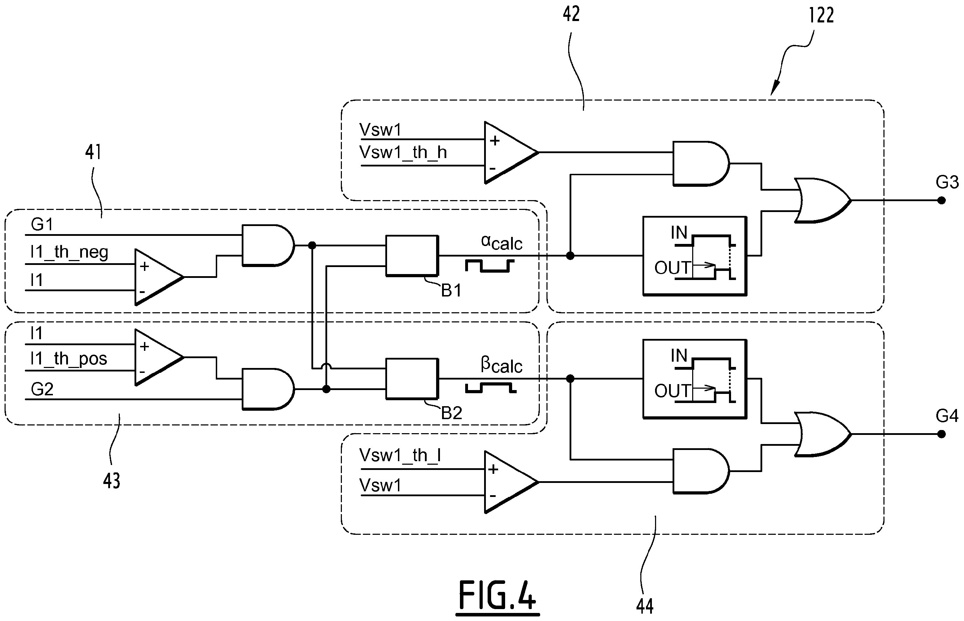

En référence aux Figures 3 et 4, les moyens de commande comprennent un premier module 121 de commande de la cellule principale 6 et un deuxième module 122 de commande de la cellule d'aide 10.

Chaque module 121, 122 comprend les composants discrets connus de l'homme du métier associés aux fonctions élémentaires nécessaires à la mise en oeuvre des principes de commande : des amplificateurs opérationnels, des comparateurs, des portes logiques ET et OU, ainsi que des inverseurs et des bascules. Le détail des modules 121, 122 est décrit ci-après.

En variante, les moyens de commande 12 comprennent un circuit logique programmable de type FPGA, qui vient de l'anglais et signifie « Field Programmable Gate Array », dans lequel les deux modules 121, 122 sont regroupés.

Les moyens de commande 12 sont raccordés à la sortie des capteurs de courant 13, ainsi qu'à la sortie d'un capteur (non représenté) mesurant la tension de sortie Vs. En outre, les moyens de commande sont raccordés aux interrupteurs T1 à T4.

Les capteurs de courant 13 sont propres à fournir aux moyens de commande 12 une information représentative du courant traversant les organes auxquels ils sont associés.

Les capteurs de courant 13 sont respectivement disposés à une extrémité des interrupteurs T1, T3 et T4.

En outre, un autre capteur de courant 13 est agencé à une extrémité de la bobine de filtrage L2, par exemple entre la bobine L2 et la borne de sortie S1, et permet de mesurer le courant de bobine $i_2$.

Les capteurs associés aux interrupteurs T3 et T4 permettent plus précisément de mesurer le courant d'aide à la commutation $i_1$.

Le capteur de courant 13 associé à l'interrupteur T1 permet en outre de contrôler la valeur de l'intensité du courant circulant dans les interrupteurs T1 et T2 afin d'éviter un endommagement des interrupteurs T1, T2.

Les principes de commande des cellules 6, 10 et le fonctionnement du système 4 selon l'invention vont maintenant être décrits en référence aux Figures 2 à 14 dans le cas où le système 4 est asservi en courant pour un courant de bobine i2 crête de consigne fixe.

A noter que les conditions suivantes sont vérifiées :

- la tension de sortie Vs est inférieure à la tension d'entrée Ve du système 4, et
- le rapport entre la valeur de l'inductance de la bobine de commutation L1 et la valeur de l'inductance de la bobine de filtrage L2 est inférieur ou égal à 1/10.

La Figure 3 illustre le premier module 121 des moyens de commande 12 et le principe de commande de la cellule principale 6 associé.

Le premier module 121 comprend un bloc d'asservissement 30 associé à la commande classique de la cellule principale 6, dans lequel le courant de bobine $i_2$ est transformé par comparaison avec un signal porteur en un signal $\alpha_p$ valant 0 ou 1.

Le signal $\alpha_p$ est fourni directement à un premier bloc de commande 31 associé à la commande de l'interrupteur T1, et est fourni via un inverseur (signal $\beta_p$) à un bloc 32 associé à la commande de l'interrupteur T2.

Le premier bloc de commande 31 comprend une porte logique ET en parallèle d'un module de retard de mise à l'état haut. Tous deux reçoivent le signal $\alpha_p$ et sont raccordés en sortie à une porte logique OU.

La porte logique ET reçoit également un signal issu d'un comparateur valant 1 si la tension Vsw2 aux bornes de l'interrupteur T2 est supérieure à une première valeur seuil Vsw2_th_h proche de la tension d'entrée Ve, et 0 sinon.

Plus précisément, la première valeur seuil Vsw2_th_h est choisie supérieure ou égale à 95% de la tension d'entrée Ve. Cette valeur de la première valeur seuil Vsw2_th_h permet de minimiser les pertes dans l'interrupteur T1. En effet, plus cette valeur est proche de la tension d'entrée Ve, plus les pertes par commutation liées à la commutation de l'interrupteur T1 sont faibles.

Le premier bloc de commande 31 commande alors la fermeture de l'interrupteur T1 si le signal délivré par la porte logique OU vaut 1, et commande l'ouverture de l'interrupteur T1 dans le cas contraire.

A noter que le module de retard de mise à l'état haut est configuré pour délivrer un signal de valeur 1 si le signal reçu par le premier bloc de commande 31 (signal $\alpha_p$ dans le cas présent) vaut 1 pendant un délai d'attente prédéterminé.

Ceci a pour effet que la fermeture de l'interrupteur T1 est tout de même réalisée au bout d'un délai prédéterminé lorsque la tension Vsw2 ne passe pas au dessus de la première valeur seuil, ce qui peut se produire en régime transitoire, par exemple lors de la mise en marche du système 4.

Le premier module 121 comprend également un deuxième bloc de commande 32 associé à la commande de l'interrupteur T2.

Les organes et le fonctionnement du bloc 32 sont analogues à ceux du premier bloc de commande 31, à la différence que le bloc 32 fonctionne à partir du signal $\beta_p$ complémentaire du signal $\alpha_p$, et en ce que le signal issu du comparateur du deuxième bloc de commande 32 vaut 1 si la tension Vsw2 est inférieure à une deuxième valeur seuil Vsw2_th_l proche de 0. Plus précisément, la deuxième valeur seuil Vsw2_th_l est choisie inférieure ou égale à 5% de la tension d'entrée Ve. Cette valeur a pour effet de minimiser les pertes par commutation lors de la commutation de l'interrupteur T2. En effet, plus cette valeur est proche de zéro, plus les pertes par commutation liées à la commutation de l'interrupteur T2 sont faibles.

De manière connue, la valeur du signal $\alpha_p$ varie cycliquement, chaque cycle portant le nom de période de découpage. La période de découpage se décompose en une phase de conduction et une phase de roue libre. Au cours de la phase de conduction, le signal $\alpha_p$ vaut 1 et le courant de bobine $i_2$ croît. Au cours de la phase de roue libre, le signal $\alpha_p$ vaut 0 et le courant de bobine $i_2$ décroît.

L'interrupteur T1 est alors fermé pendant la phase de conduction si la tension Vsw2 est supérieure à la première valeur seuil Vsw2_th_h. A la fin de la phase de conduction, c'est-à-dire lorsque le signal $\alpha_p$ repasse à 0, les moyens de commande 12 ouvrent l'interrupteur T1.

A l'inverse, l'interrupteur T2 est, par exemple, fermé pendant la phase de roue libre si la tension Vsw2 est inférieure à la deuxième valeur seuil Vsw2_th_l. Les moyens de commande 12 ouvrent alors l'interrupteur T2 à la fin de la phase de roue libre.

Le premier module 121 et le principe de commande de la cellule principale 6 associé permettent à la fois d'assurer l'asservissement en courant du système 4 ou l'asservissement en tension en fonction d'une consigne via le bloc d'asservissement 30, mais aussi de réaliser la fermeture des interrupteurs T1, T2 lorsque la tension à leurs bornes est proche de zéro voire nulle via les blocs de commande 31 et 32. L'ouverture des interrupteurs T1 et T2 est alors commandée par les moyens de commande 12 en fonction de la période de découpage.

Le principe de fonctionnement des moyens de commande 12 est le même quel que soit le mode d'asservissement du système, la seule différence entre les modes d'asservissement se situant au niveau du bloc d'asservissement 30 qui est alors adapté au mode d'asservissement considéré.

La Figure 4 illustre le deuxième module 122 et le principe de commande de la cellule d'aide 10 associé.

Le deuxième module 122 comprend quatre blocs de commande 41, 42, 43, 44, ci-après troisième, quatrième, cinquième et sixième blocs de commande respectivement.

Le troisième bloc de commande 41 est associé à l'interrupteur T3 et comprend un comparateur délivrant à une porte logique ET un signal de valeur 1 lorsque le courant d'aide à la commutation $i_1$ est inférieur au deuxième seuil de courant i1_th_neg, et de valeur 0 sinon. La porte ET reçoit également en entrée la sortie du premier bloc de commande 31, et délivre en sortie son signal à une bascule B1 que comprend le troisième bloc de commande 41.

Le cinquième bloc de commande 43 est associé à l'interrupteur T4 et comprend les mêmes éléments que le troisième bloc de commande 41, à la différence que sa porte logique ET délivre un signal valant 1 lorsque le courant d'aide à la commutation $i_1$ est supérieur au premier seuil de courant i1_th_pos et l'interrupteur T2 est fermé. La porte ET du cinquième bloc 43 délivre son signal à une bascule B2 que le cinquième bloc de commande 43 comprend, mais aussi à la bascule B1 du troisième bloc de commande 41, de même que la porte logique ET du troisième bloc de commande 41 délivre son signal également à la bascule B2 du cinquième bloc de commande 43.

Le signal délivré par la bascule B1, qui correspond au signal de sortie du troisième bloc de commande 41, passe à 1 lorsque la sortie de la porte logique ET du troisième bloc 41 passe à 1, et demeure à la valeur 1 tant que la valeur du signal de la porte logique ET du cinquième bloc 43 demeure à 0. Lorsque le signal de la porte logique ET du cinquième bloc de commande 43 passe à 1, la valeur du signal de sortie de la bascule B1 passe à 0 et reste à cette valeur tant que la sortie de la porte logique ET du troisième bloc de commande 41 vaut 0.

Inversement, le signal délivré par la bascule B2, qui correspond au signal de sortie du cinquième bloc de commande 43, passe à 1 lorsque la sortie de la porte logique ET du cinquième bloc de commande 43 passe à 1, et demeure à cette valeur tant que la sortie de la porte logique ET du troisième bloc de commande 41 vaut 0. Le signal de la bascule B2 passe à la valeur 0 lorsque la sortie de la porte logique ET du troisième bloc de commande 41 passe à 1.

Les signaux délivrés par les troisième et cinquième blocs de commande 41, 43 (signal $\alpha_{calc}$, respectivement $\beta_{calc}$) sont fournis au quatrième, respectivement sixième blocs de commande 42, 44, qui sont associés à la commande de l'interrupteur T3, respectivement de l'interrupteur T4.

Les quatrième et sixième blocs de commande 42, 44 présentent un fonctionnement proche de celui des premier et deuxième blocs de commande 31, 32.

Plus précisément, le quatrième bloc de commande 42 commande la fermeture de l'interrupteur T3 lorsque le signal $\alpha_{calc}$ vaut 1 et la tension Vsw1 est supérieure à une première valeur seuil secondaire Vsw1_th_h proche de la tension d'entrée Ve, ou si le signal $\alpha_{calc}$ vaut 1 pendant un délai d'une durée prédéterminée alors que la tension Vsw1 demeure inférieure à la première valeur seuil secondaire Vsw1_th_h.

La première valeur seuil secondaire Vsw1_th_h est supérieure ou égale à 95% de la valeur de la tension d'entrée Ve, ce qui minimise les pertes par commutation au niveau de l'interrupteur T3, comme précédemment.

Le sixième bloc de commande 44 commande la fermeture de l'interrupteur T4 lorsque le signal $\beta_{calc}$ vaut 1 et la tension Vsw1 est inférieure à une deuxième valeur seuil secondaire Vsw1_th_l proche de zéro, ou lorsque le signal $\beta_{calc}$ vaut 1 pendant un délai prédéterminé, alors que la tension Vsw1 demeure supérieure à la deuxième valeur seuil secondaire Vsw1_th_l.

La deuxième valeur seuil secondaire Vsw1_th_l est inférieure ou égale à 5% de la valeur de la tension d'entrée Ve. Ceci minimise les pertes par commutation au niveau de l'interrupteur T4, comme décrit précédemment.

En résumé, les moyens de commande 12 commandent la fermeture de l'interrupteur T3 si :

- l'interrupteur T1 est fermé et le courant d'aide à la commutation $i_1$ est inférieur au deuxième seuil de courant i1_th_neg,

et

- la tension Vsw1 est supérieure à la première valeur seuil secondaire Vsw1_th_h, ou bien l'interrupteur T1 est fermé et le courant d'aide à la commutation $i_1$ est inférieur au deuxième seuil de courant i1_th_neg pendant un délai prédéterminé.

L'interrupteur T3 est commandé ouvert par les moyens de commande 12 uniquement si :

- l'interrupteur T2 est fermé, et
- le courant d'aide à la commutation $i_1$ est supérieur au premier seuil de courant i1_th_pos.

De même, les moyens de commande 12 commandent la fermeture de l'interrupteur T4 si :

- l'interrupteur T2 est fermé et le courant d'aide à la commutation $i_1$ est supérieur au premier seuil de courant i1_th_pos,

et

- la tension Vsw1 est inférieure à la deuxième valeur seuil secondaire Vsw1_th_l, ou bien l'interrupteur T2 est fermé et le courant d'aide à la commutation $i_1$ est supérieur au premier seuil de courant i1_th_pos pendant un délai prédéterminé.

L'interrupteur T4 est commandé ouvert par les moyens de commande 12 uniquement si :

- l'interrupteur T1 est fermé, et
- le courant d'aide à la commutation $i_1$ est inférieur au deuxième seuil de courant i1_th_neg.

Ce principe de commande de la cellule d'aide 10 permet de réaliser la fermeture des interrupteurs T3, T4 lorsque la tension aux bornes de ces interrupteurs est minimisée, ce qui permet de réduire les pertes par commutation au niveau des interrupteurs T3 et T4. En outre, du fait que la commande des interrupteurs T3 et T4 dépend de l'état de T1 et T2, les pertes par commutation qui ont été réduites au niveau des interrupteurs T1 et T2 ne sont pas reportées sur les interrupteurs T3 et T4.

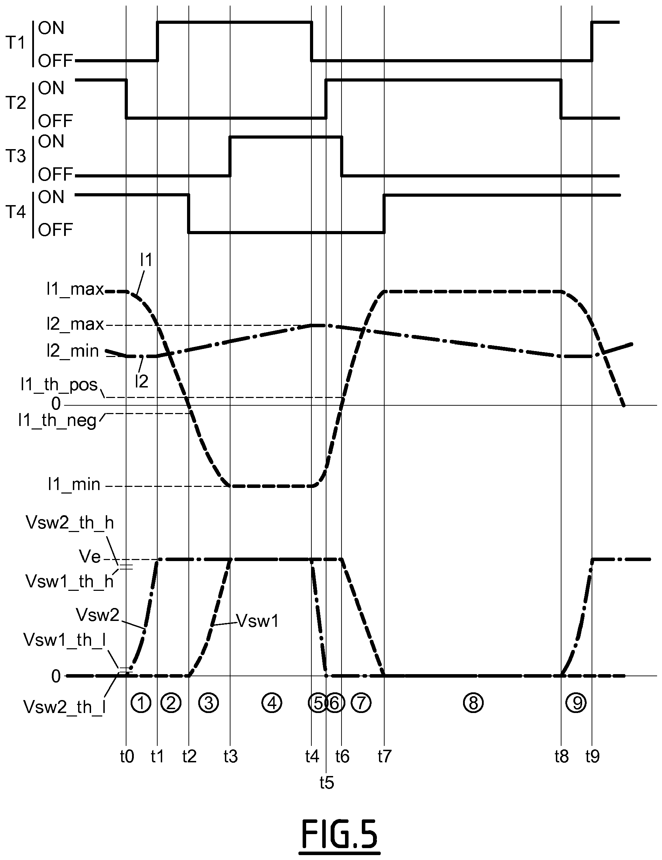

Le fonctionnement du système 4 va maintenant être décrit plus en détail en référence aux Figures 5 et 6 à 14 pour une valeur moyenne du courant de bobine $i_2$ positive.

Lors du fonctionnement du système 4, un transfert d'énergie électrique a lieu entre les éléments passifs C1 et L1 d'une part, et C2 et L2 d'autre part.

L'équation régissant ce principe est la suivante : $\frac{1}{2}L1 \times i_1^2 = \frac{1}{2}C_x \times Vswx^2$, où $x$ est égal à 1 ou 2 en fonction de la phase de fonctionnement du système 4.

Ces transferts d'énergie entraînent l'apparition d'une résonance entre les éléments passifs L1 et C1 d'une part, et les éléments L1, L2, C2 d'autre part, ce qui induit un courant d'aide à la commutation $i_1$ de forme sinusoïdale.

Les valeurs des capacités des condensateurs C1 et C2 sont alors choisies en fonction des pertes à l'ouverture et à la fermeture de l'interrupteur auquel les condensateurs sont respectivement associés.

La Figure 5 illustre la variation en fonction du temps des principales grandeurs du système 4 au cours d'une période de découpage: l'état des interrupteurs T1 à T4, l'état ON correspondant à un interrupteur fermé, l'état OFF à un interrupteur ouvert, les courants d'aide à la commutation $i_1$ et de bobine $i_2$, et les tensions Vsw1 et Vsw2 aux bornes de l'interrupteur T4, respectivement T2.

Les valeurs maximale et minimale du courant de bobine $i_2$ sont notées i2_max et i2_min.

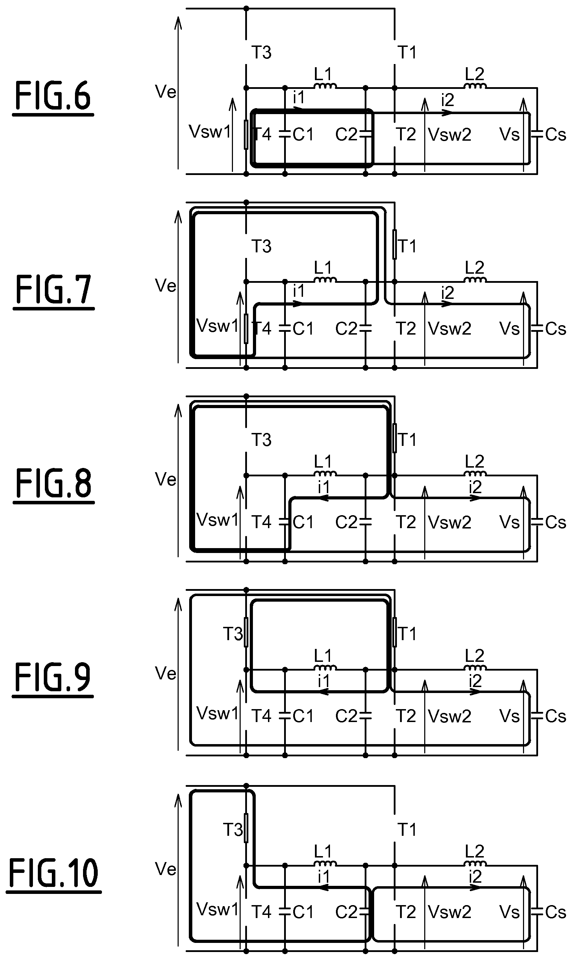

Les Figures 6 à 14 illustrent la circulation des courants $i_1$ et $i_2$ dans le système 4 lors d'étapes du fonctionnement du système 4.

Préalablement à l'instant initial t0, le système 4 se trouve en phase de roue libre. Dans cet état, les interrupteurs T2 et T4 sont fermés, les interrupteurs T1 et T3 sont ouverts, le courant d'aide à la commutation $i_1$ est maximal, le courant de bobine $i_2$ décroît vers i2_min, et les tensions Vsw1 et Vsw2 sont nulles.

A l'instant t0, qui marque le début d'une étape 1, la phase de roue libre prend fin, et les moyens de commande 12 commandent l'ouverture de l'interrupteur T2.

En référence à la Figure 6, au cours de cette étape 1, l'énergie électrique emmagasinée dans la bobine L1 est transférée au condensateur C1, ce qui fait décroître le courant d'aide à la commutation $i_1$ et rapidement croître la tension Vsw2 jusqu'à la tension d'entrée Ve. Plus précisément, la tension Vsw2 devient supérieure à la première valeur seuil principale Vsw2_th_h (instant t1).

A l'instant t1, le premier module 121 commande la fermeture de l'interrupteur T1, ce qui marque le début d'une étape 2.

En référence à la Figure 7, au cours de l'étape 2, le courant d'aide à la commutation $i_1$ continue de décroître, jusqu'à devenir nul, et plus particulièrement inférieur au premier seuil de courant i1_th_pos (instant t2).

A l'instant t2, le deuxième module 122 commande l'ouverture de l'interrupteur T4, ce qui marque le début d'une étape 3.

En référence à la Figure 8, au cours de l'étape 3, l'énergie électrique emmagasinée dans la bobine de commutation L1 continue de décroître et est transférée au condensateur C1, ce qui a pour effet de faire rapidement croître la tension Vsw1 jusqu'à la tension d'entrée Ve, et plus particulièrement de la faire passer au-dessus de la première valeur seuil secondaire Vsw1_th_h (instant t3). A cet instant t3, le courant d'aide à la commutation $i_1$ vaut i1_min.

A l'instant t3, le deuxième module 122 commande la fermeture de l'interrupteur T3, ce qui marque le début d'une étape 4, qui correspond à la phase de conduction de la période de découpage.

En référence à la Figure 9, au cours de l'étape 4, la valeur du courant d'aide à la commutation $i_1$ est maintenue à sa valeur i1_min, jusqu'à un instant t4 correspondant à la fin de la phase de conduction.

A l'instant t4, le premier module 121 commande l'ouverture de l'interrupteur T1, ce qui marque le début d'une étape 5.

En référence à la Figure 10, au cours de l'étape 5, le condensateur C2 se décharge rapidement en communiquant son énergie électrique à la bobine de commutation L1. Ainsi, le courant d'aide à la commutation $i_1$ croît et la tension Vsw2 baisse rapidement jusqu'à zéro, et plus spécifiquement devient inférieure à la deuxième valeur seuil principale Vsw2_th_l (instant t5).

A l'instant t5, le premier module 121 commande la fermeture de l'interrupteur T2, ce qui marque le début d'une étape 6.

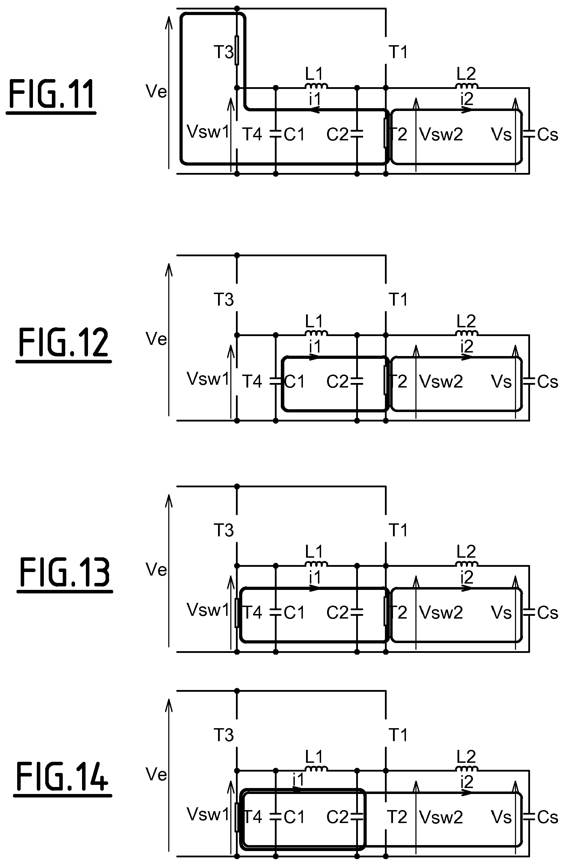

En référence à la Figure 11, au cours de l'étape 6, la tension aux bornes de la bobine de commutation L1 est forcée à la tension d'entrée Ve, ce qui fait rapidement croître le courant d'aide à la commutation $i_1$ jusqu'à une valeur proche de zéro. Plus spécifiquement, le courant d'aide à la commutation devient supérieur au deuxième seuil de courant i1_th_neg (instant t6).

A l'instant t6, le deuxième module 122 commande l'ouverture de l'interrupteur T3, ce qui marque le début d'une étape 7.

En référence à la Figure 12, au cours de l'étape 7, le condensateur C1 se décharge en faisant croître le courant d'aide à la commutation $i_1$. La tension aux bornes du condensateur C1, c'est-à-dire Vsw1, devient nulle, et plus spécifiquement inférieure à la deuxième valeur seuil secondaire Vsw1_th_l (instant t7).

A l'instant t7, le deuxième module 122 commande la fermeture de l'interrupteur T4, ce qui marque le début d'une étape 8.

En référence à la Figure 13, au cours de l'étape 8, le courant d'aide à la commutation $i_1$ est maintenu. Cette étape 8 correspond à la phase de roue libre du cycle de découpage.

A un instant t9, la phase de roue libre prend fin, et le premier module 121 commande l'ouverture de l'interrupteur T2, ce qui marque le début d'une étape 9.

L'étape 1 et l'étape 9 sont similaires, l'étape 9 marquant le début d'un nouveau cycle du découpage du système 4.

Comme indiqué précédemment, la présence de la cellule d'aide 10 et spécifiquement des condensateurs de commutation C1 et C2 en parallèle d'un interrupteur principal et d'un interrupteur secondaire, ainsi que les principes de commande de la cellule principale 6 et d'aide 10 ont pour effet de réduire les pertes par commutation survenant lors de la commutation des interrupteurs principaux T1, T2.

En outre, la commutation des interrupteurs secondaires T3, T4 est elle-même à faibles pertes par commutation du fait que leur commutation est opérée lorsque la tension à leurs bornes est minimisée.

Par ailleurs, le système 4 est adapté pour fonctionner quelle que soit la valeur moyenne du courant de bobine $i_2$, et plus précisément lorsque le courant de bobine $i_2$ présente une valeur moyenne négative ou nulle.

En outre, pour être efficace dans ces configurations, le système 4 ne requiert pas de disposer de diodes à faible recouvrement, comme par exemple des diodes Schottky, en parallèle des interrupteurs, ce qui a notamment pour effet d'accroître les pertes par conduction en plus d'accroître le nombre d'organes du système.

En variante non représentée, le condensateur de commutation C2 est disposé en parallèle de l'interrupteur T1.

En variante non représentée, le condensateur de commutation C1 est disposé en parallèle de l'interrupteur T3, et le condensateur de commutation C2 est disposé en parallèle de l'interrupteur T1.

En variante non représentée, le système 4 comprend quatre condensateurs de commutation respectivement disposés en parallèle de l'un des interrupteurs T1 à T4, c'est-à-dire un condensateur de commutation en parallèle de chacun des interrupteurs, chaque interrupteur étant associé à un unique condensateur de commutation.

Ces variantes sont mises en oeuvre en fonction des caractéristiques des interrupteurs T1 à T4, et notamment en fonction des contraintes électriques imposées au système 4, comme par exemple la tension d'entrée Ve du système 4. Les valeurs des capacités des condensateurs C1 à C4 sont alors déterminées en fonction du temps de montée et de descente des tensions Vsw1 et Vsw2 et des niveaux de pertes en commutation des interrupteurs.

La détermination des seuils de courant i1_th_pos et i1_th_neg va maintenant être décrite en référence aux Figures 2, 5 et 6 à 14.

Au deuxième point électrique 6B de la cellule principale 6, lorsque l'interrupteur T2 est ouvert, l'équation suivante est vérifiée :

$$i1 = i2 + Ic2 \qquad (a),$$

Ic2 étant le courant circulant dans la branche comportant le condensateur C2.

De manière simplifiée, la variation de la tension Vsw2 se présente sous la forme :

$$\frac{dVsw2}{dt} = \frac{Ic2}{C2} \qquad (b).$$

Dans ce qui suit, Ci désigne à la fois le condensateur Ci et la capacité du condensateur Ci.

La relation (b) impose que pour obtenir une variation suffisamment rapide et grande de la tension Vsw2, le courant Ic2 doit être correctement défini.

En référence à la Figure 5, à l'instant t0 de la phase 1, la relation (b) devient :

$$\frac{dVsw2}{dt} = \frac{\Delta Ia}{C2} \ ,$$

avec $\Delta Ia = i1\_max - i2\_min$.

A l'instant t4, la relation (b) devient :

$$\frac{dVsw2}{dt} = \frac{\Delta Ib}{C2} ,$$

avec $\Delta Ib = i1\_min - i2\_max$.

Les seuils i2_max et i2_min sont prédéterminés par le mode d'asservissement du système 4 et la nature du filtre de sortie 8. Dès lors, seuls les seuils i1_min et i1_max peuvent être modifiés.

Au cours de la phase 3, la résonance du courant d'aide à la commutation i1 est de la forme suivante:

$$I1(t) = I1\_th\_neg - Ve * \sqrt{\frac{C1}{L1}} \sin(\omega_0 t), \text{ avec } \omega_0 = \sqrt{\frac{1}{L1 * C1}} \ .$$

De manière symétrique, au cours de la phase 7, le courant d'aide à la commutation s'exprime sous la forme suivante:

$$I1(t) = I1\_th\_pos + Ve * \sqrt{\frac{C1}{L1}} \sin(\omega_0 t) \ .$$

On voit ainsi apparaître les seuils I1_th_pos et I1_th_neg, qui sont les niveaux de courant à partir desquels la résonance du courant d'aide à la commutation i1 se produit.

En outre, on voit que les extrema i1_max et i1_min du courant d'aide à la commutation sont liés aux seuils I1_th_pos et I1_th_neg.

Par ailleurs, les principales équations et inéquations du système 4 lors de son fonctionnement sont les suivantes.

Lors de la phase 1, afin de garantir la croissance de la tension Vsw2 jusqu'à la tension d'entrée Ve, l'inéquation suivante est vérifiée :

$$\left| i1\_\max - i2\_\min \right| \geq Ve * \sqrt{\frac{C2}{\left(\frac{L1*L2}{L1+L2}\right)}} \quad (1)$$

Lors de la phase 3, le système 4 garantit naturellement la croissance de la tension Vsw1, et donc la commutation à zéro de tension de l'interrupteur T3. Aussi, l'équation suivante est vérifiée :

$$Vsw1(t) = Ve * (1 - \cos(\omega_0 t)) - i1\_th\_neg * \sqrt{\frac{L1}{C1}} * \sin(\omega_0 t) , \quad (2)$$

L'équation (2) impose que la valeur de i1_th_neg ne s'oppose pas à la croissance de la tension Vsw1.

Lors de la phase 5, afin de garantir la décroissance de la tension Vsw2 jusqu'à zéro, l'inéquation suivante est vérifiée :

$$\left| i1\_\min - i2\_\max \right| \geq Ve * \sqrt{\frac{C2}{\left(\frac{L1*L2}{L1+L2}\right)}} \quad (3)$$

Lors de la phase 7, afin de garantir la décroissance de la tension Vsw1 jusqu'à zéro, l'inéquation suivante est vérifiée :

$$\left| i1\_th\_pos \right| \geq Ve * \sqrt{\frac{C1}{L1}} \quad (4)$$

La détermination des seuils i1_th_neg et i1_th_pos est réalisée à partir des relations (1) et (3), les résultats obtenus devant par suite vérifier les relations (2) et (4).

Du fait qu'à l'instant t7, la tension Vsw1 est nulle, l'expression du courant d'aide à la commutation i1 à cet instant t7 donne :

$$i1\_\max = i1\_th\_pos * \cos(\omega_0 * t7)) + Ve * \sqrt{\frac{C1}{L1}} * \sin(\omega_0 * t7) \quad (5),$$

De la même manière, du fait qu'à l'instant t3, la tension Vsw1 vaut la tension d'entrée Ve, l'expression du courant d'aide à la commutation à l'instant t3 donne :

$$i1\_\min = i1\_th\_neg * \cos(\omega_0 * t3)) - Ve * \sqrt{\frac{C1}{L1}} * \sin(\omega_0 * t3) \quad (6)$$

A partir des relations (3) et (6), on obtient la relation suivante pour le seuil i1_th_neg :

$$I1\_th\_neg \leq \frac{1}{\cos(\omega_0 * t3)} * \left( -Ve * \sqrt{\frac{C2}{\left(\frac{L1*L2}{L1+L2}\right)}} + i2\_\max + Ve * \sqrt{\frac{C1}{L1}} * \sin(\omega_0 * t3) \right) \quad (7)$$

Dans le cas où la croissance de la tension Vsw1 est parfaite et donc instantanée (t3 = 0), on obtient la valeur minimale i1_th_neg_min du seuil i1_th_neg à partir de laquelle la commutation à tension nulle des interrupteurs est obtenue :

$$i1\_th\_neg\_\min = \left( -Ve * \sqrt{\frac{C2}{\left(\frac{L1*L2}{L1+L2}\right)}} + i2\_\max \right) \quad (8)$$

De la même manière, à partir des relations (1) et (5), on obtient la relation suivante :

$$i1\_th\_pos \geq \frac{1}{\cos(\omega_0 * t7)} * \left( Ve * \sqrt{\frac{C2}{\left(\frac{L1*L2}{L1+L2}\right)}} + i2\_\min - Ve * \sqrt{\frac{C1}{L1}} * \sin(\omega_0 * t7) \right) (9)$$

A noter qu'en pratique, dans les relations (5), (6), (7) et (9), les instants t3 et t7 sont obtenus en prenant pour origine des temps l'instant t2, respectivement l'instant t6.
Dans le cas où la décroissance de la tension Vsw1 est parfaite et donc instantanée (t7 = 0), on obtient la valeur maximale i1_th_pos_max du seuil i1_th_pos à partir de laquelle la commutation à zéro de tension des interrupteurs est obtenue :

$$i1\_th\_pos\_\max = \left( Ve * \sqrt{\frac{C2}{\left(\frac{L1*L2}{L1+L2}\right)}} + i2\_\min \right) \quad (10)$$

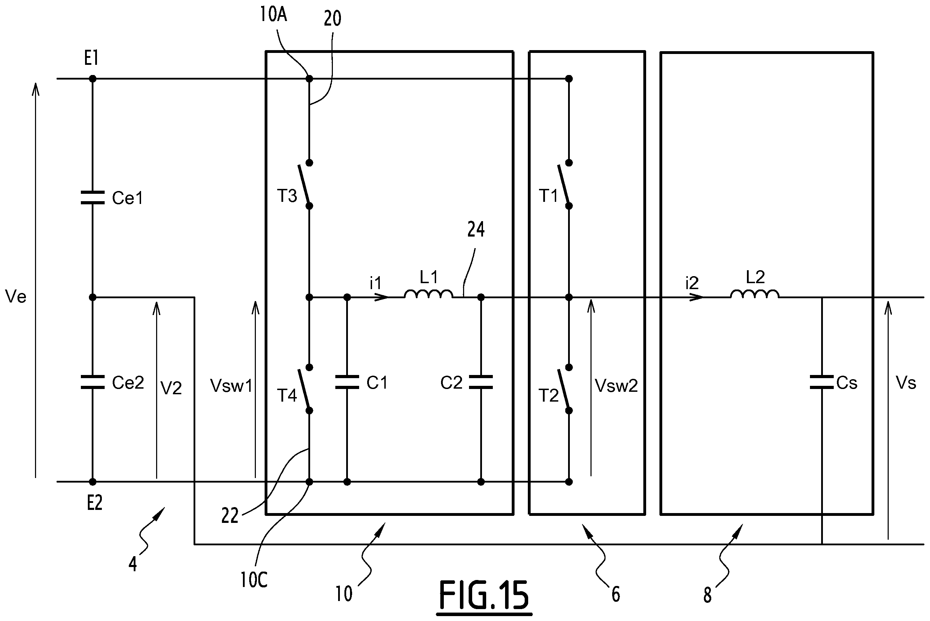

D'après les relations (7) à (10), on constate que les seuils i1_th_pos et i1_th_neg dépendent des éléments passifs du système (L1, L2, C1 et C2), des niveaux de courant i2_max et i2_min et des temps de croissance et décroissance de la tension de Vsw1.
Le choix des valeurs des seuils i1_th_pos et i1_th_neg est alors réalisé de façon à obtenir un compromis entre d'une part le niveau des pertes par commutation via la définition des valeurs des capacités des condensateurs C1, C2, et d'autre part la vitesse de variation de la tension Vsw1.
A noter que les valeurs des seuils i1_th_pos et i1_th_neg et des extrema i1_max et i1_min sont dépendantes des temps de croissance et décroissance des tensions Vsw1 et Vsw2.
Le choix d'un temps de commutation et d'un niveau de pertes par commutation faibles induira alors un niveau de pertes par conduction plus élevé dans le système.
En référence à la Figure 15, dans une première variante, le système 4 comprend, outre les éléments précédemment décrits, deux condensateurs Ce1, Ce2 montés en série sur une branche électrique connectée aux bornes d'entrée E1 et E2 du système 4. Les points électriques 10A et 10C de la cellule d'aide 10 sont raccordés à la borne d'entrée E1, respectivement E2 du système 4.

Le condensateur de filtrage Cs est raccordé au milieu de l'association en série des deux condensateurs Ce1, Ce2.

Les condensateurs Ce1, Ce2, la cellule principale 6 et le filtre de sortie 8 forment un montage onduleur à demi-pont, l'expression « demi-pont » venant de l'anglais « half-bridge ».

En régime permanent, la tension aux bornes des condensateurs Ce1, Ce2 vaut sensiblement Ve/2.

La commande des interrupteurs T1 à T4 est réalisée de la même manière que précédemment décrit.

Cette variante est avantageusement mise en oeuvre pour faire diminuer les pertes au niveau des interrupteurs dans une topologie comportant un onduleur à demi-pont.

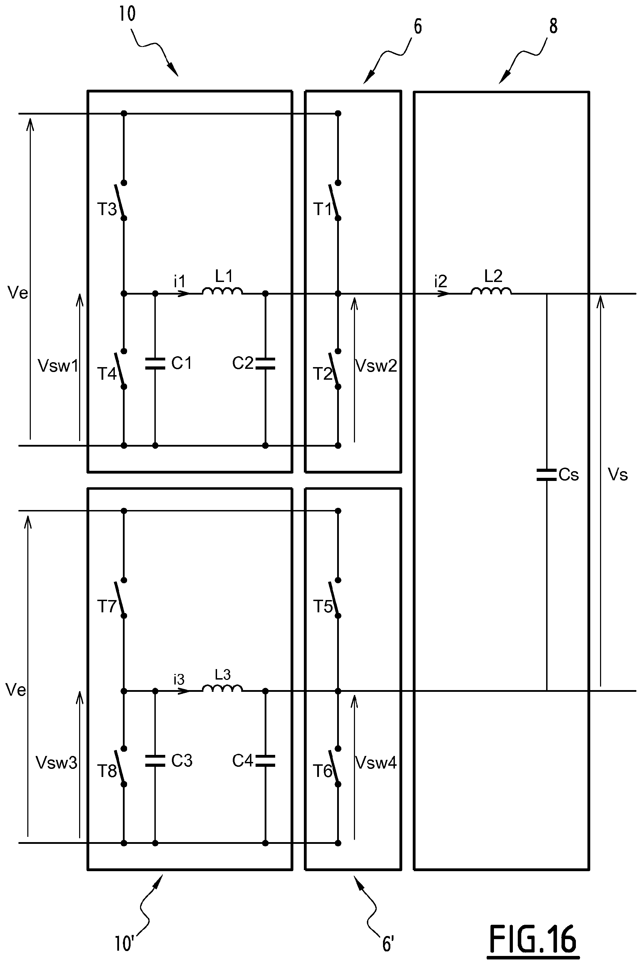

En référence à la Figure 16, dans une deuxième variante, outre les éléments précédemment décrit en référence à la Figure 2, le système 4 comprend une cellule de commutation principale secondaire 6', ci-après cellule principale secondaire 6', et une cellule d'aide à la commutation secondaire 10', ci-après cellule d'aide secondaire 10'.

La cellule principale secondaire 6' et la cellule d'aide secondaire 10' sont identiques à la cellule principale 6 et à la cellule d'aide 10 respectivement et sont connectées en cascade l'une de l'autre de la même manière que le sont la cellule d'aide 10 et la cellule principale 6.

La cellule principale secondaire 6' comprend deux interrupteurs principaux notés T5 et T6.

La cellule d'aide secondaire 10' comprend deux interrupteurs secondaires notés T7 et T8 et une bobine de commutation L3 traversée par un courant d'aide à la commutation $i_3$. En outre, la cellule d'aide secondaire 10' comprend deux condensateurs de commutation C3, C4 disposés pour l'un en parallèle de l'un des interrupteurs secondaires T7 et T8 et pour l'autre en parallèle de l'un des interrupteurs principaux T5 et T6.

En outre, le système 4 comprend des capteurs de courant secondaires, non représentés, raccordés aux moyens de commande 12 et disposés sur les branches de la cellule principale secondaire 6' et de la cellule d'aide secondaire 10' de la même manière que les capteurs de courant 13 le sont relativement aux cellules de commutation 6 et d'aide 10.

La cellule principale secondaire 6' est raccordée en sortie au condensateur de filtrage Cs.

La cellule d'aide secondaire 10' est raccordée en entrée à une source d'énergie électrique fournissant également une tension d'entrée Ve continue.

Dans le cadre de cette variante, la cellule principale 6, la cellule principale secondaire 6' et le filtre de sortie 8 forment un montage onduleur à pont-complet, l'expression « pont-complet » venant de l'anglais « full-bridge ».

Les interrupteurs de la cellule de commutation 6 et de la cellule principale secondaire 6' sont commandés par les moyens de commande 12 au moyen d'une loi de commande commune permettant de réaliser l'asservissement de la tension de sortie Vs à une consigne étant, par exemple, de forme alternative et usuellement sinusoïdale.

Les interrupteurs de la cellule d'aide secondaire 10' sont alors commandés de manière analogue à la manière dont les interrupteurs de la cellule d'aide 10 sont commandés.

Plus spécifiquement, les interrupteurs T7, T8 de la cellule d'aide secondaire 10' sont commandés en fonction de l'état des interrupteurs T5, T6 de la cellule principale secondaire 6', du courant d'aide à la commutation $i_3$ traversant la bobine de commutation L3, et de la tension Vsw3 aux bornes de l'interrupteur secondaire T8 situé sur la deuxième branche de la cellule d'aide secondaire 10'.

Les seuils de courant et de tension précédemment décrits pour la commande des interrupteurs T3 et T4 de la cellule d'aide 10 interviennent de façon similaire dans la commande des interrupteurs T7, T8 de la cellule d'aide secondaire 10', mais présentent des valeurs adaptées aux valeurs des capacités des condensateurs de commutation secondaires C3, C4 et de l'inductance de la bobine de commutation L3 de la cellule d'aide secondaire 10'.

Cette variante est avantageusement mise en oeuvre pour permettre de réduire les pertes d'énergie électrique au niveau des interrupteurs dans une topologie à onduleur à pont complet.

Dans un mode de réalisation particulier de cette variante, le filtre de sortie 8 comprend une deuxième bobine de filtrage L2' interposée entre la sortie de la cellule principale secondaire 6' et le condensateur de filtrage Cs.

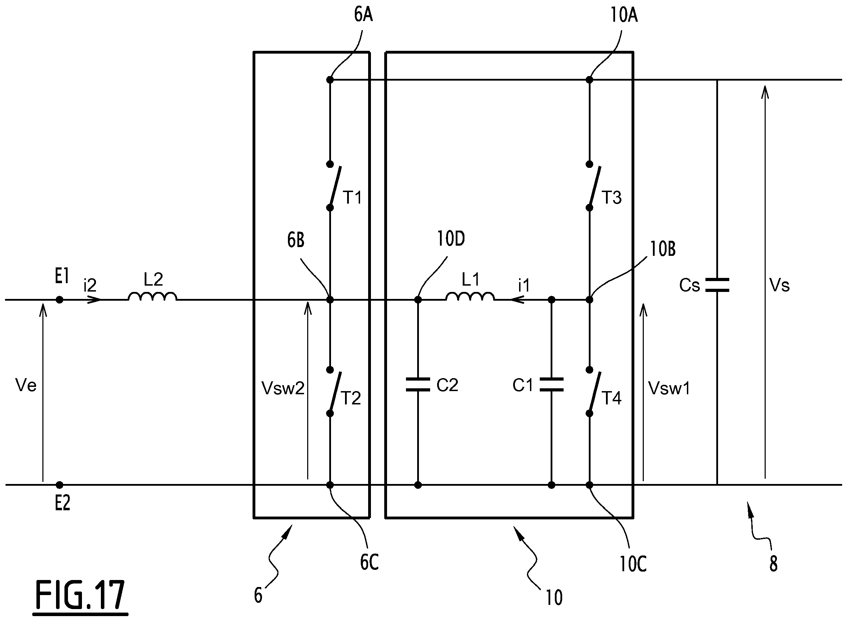

En référence à la Figure 17, dans une troisième variante, le système 4 comprend les mêmes éléments que ceux décrits en référence à la Figure 2.

La bobine de filtrage L2, ci-après bobine L2, se situe en entrée du système 4.

En outre, les positions relatives de la cellule principale 6 et la cellule d'aide 10 sont inversées par rapport à la disposition décrite dans la Figure 2, la cellule d'aide 10 se situant en aval de la cellule principale 6.

Plus précisément, la bobine L2 est connectée à la borne d'entrée E1 du système 4 et au deuxième point électrique 6B de la cellule principale 6.

La borne d'entrée E2 du système 4 est connectée au troisième point électrique 6C de la cellule principale 6.

Le septième point électrique 10D de la cellule d'aide 10 est connecté au deuxième point électrique 6B de la cellule principale 6, les premier et troisième points électriques 6A et 6C étant connectés aux quatrième, respectivement sixième points électriques 10A, 10C, qui sont également connectés aux bornes du condensateur de sortie Cs du filtre de sortie 8.

Dans l'exemple de la Figure 17, la bobine L2 et la cellule principale 6 forment un convertisseur élévateur de tension, également connu sous le nom anglophone de convertisseur Boost.

Le principe de commande décrit pour la topologie illustrée sur la Figure 2 demeure le même, les grandeurs à partir desquelles la commande des interrupteurs T1 à T4 est réalisée demeurant identiques.

Cette variante est avantageusement mise en oeuvre afin de permettre de réduire les pertes par commutation dans une topologie comportant un convertisseur élévateur de tension et qui ne présente pas les inconvénients précédemment décrits.

**Revendications**

1. Système d'alimentation électrique destiné à être raccordé en entrée à une source d'énergie électrique et en sortie à une charge, comprenant :

- une cellule de commutation principale (6) comprenant une première branche principale (14) et une deuxième branche principale (16) comportant chacune un interrupteur principal (T1, T2) commandable entre un état ouvert et un état fermé, et
- une cellule d'aide à la commutation (10) raccordée à la cellule de commutation principale (6) et comprenant d'un part une première branche secondaire (20) et une deuxième branche secondaire (22) chacune comportant un interrupteur secondaire (T3, T4) commandable entre un état ouvert et un état fermé, et d'autre part une branche de raccordement (24) pour le raccordement de la cellule d'aide à la commutation (10) à la cellule de commutation principale (6), la branche de raccordement (24) comportant une bobine de commutation (L1),

la cellule de commutation principale (6) et la cellule d'aide à la commutation (10) étant connectées en cascade l'une de l'autre,

la cellule d'aide à la commutation (10) comprenant en outre au moins deux condensateurs de commutation (C1, C2), un condensateur de commutation (C1) étant disposé en parallèle de l'un des interrupteurs secondaires (T3, T4) et un autre condensateur de commutation (C2) étant disposé en parallèle de l'un des interrupteurs principaux (T1, T2),

le système d'alimentation électrique comprenant en outre deux bornes d'entrée (E1, E2), deux bornes de sortie (S1, S2), un filtre de sortie (8) connecté entre les bornes de sortie (S1, S2), et une bobine (L2), la bobine (L2) étant comprise dans le filtre de sortie (8) ou bien connectée à l'une des bornes d'entrée (E1, E2) et à la cellule de commutation principale (6), ladite bobine (L2) étant propre à être traversée par un courant de bobine ($i_2$), le système d'alimentation étant propre à recevoir une tension d'entrée (Ve) et à fournir en sortie une tension de sortie (Vs), le système d'alimentation (4) comprenant en outre des moyens de commande (12) propres à commander l'ouverture et la fermeture des interrupteurs principaux (T1, T2) et secondaires (T3, T4) pour l'asservissement en tension du système d'alimentation en fonction de la tension d'entrée (Ve) ou de la tension de sortie (Vs), ou bien l'asservissement en courant du système d'alimentation en fonction du courant de bobine ($i_2$), et les moyens de commande (12) étant configurés pour commander les interrupteurs secondaires (T3, T4) en opposition de phase l'un de l'autre en fonction d'un courant d'aide à la commutation ($i_1$) traversant la bobine de commutation (L1), de l'état des interrupteurs principaux (T1, T2) et de la tension aux bornes de l'interrupteur secondaire de la deuxième branche secondaire de la cellule d'aide à la commutation (Vsw1),

**caractérisé en ce que**, les moyens de commande (12) sont configurés pour commander la fermeture de l'interrupteur secondaire (T3) de la première branche secondaire (20) de la cellule d'aide à la commutation (T3):

- si l'interrupteur principal (T1) de la première branche principale (14) de la cellule de commutation principale (6) est fermé et le courant d'aide à la commutation ($i_1$) est inférieur à un deuxième seuil de courant (I1_th_neg) de valeur négative, et
- si la tension aux bornes de l'interrupteur secondaire (T4) de la deuxième branche secondaire (22) de la cellule d'aide à la commutation (Vsw1) est supérieure à une première valeur seuil secondaire (Vsw1_th_h), ou bien l'interrupteur principal (T1) de la première branche principale (14) de la cellule de commutation principale (6) est fermé et le courant d'aide à la commutation ($i_1$) est inférieur au deuxième seuil de courant (I1_th_neg) pendant un délai prédéterminé,

et pour commander l'ouverture de l'interrupteur secondaire (T3) de la première branche secondaire (20) de la cellule d'aide à la commutation (10) si l'interrupteur principal (T2) de la deuxième branche principale (16) de la cellule de commutation principale (6) est fermé et le courant d'aide à la commutation ($i_1$) est supérieur à un premier seuil de courant (I1_th_pos) de valeur positive.

2. Système selon la revendication 1, **caractérisé en ce que** les moyens de commande (12) sont configurés pour commander les interrupteurs principaux (T1, T2) en opposition de phase l'un de l'autre, les interrupteurs principaux (T1, T2) étant commandés ouverts ou fermés par les moyens de commande (12) également en fonction de la tension aux bornes de l'interrupteur principal de la deuxième branche principale de la cellule de commutation principale (Vsw2).

3. Système selon la revendication 2, **caractérisé en ce que** les moyens de commande (12) sont configurés pour :

- commander la fermeture de l'interrupteur principal (T1) de la première branche principale (14) de la cellule de commutation principale (6) uniquement si la tension aux bornes de l'interrupteur principal de la deuxième branche (Vsw2) est supérieure à une première valeur seuil (Vsw2_th_h), et
- commander la fermeture de l'interrupteur principal (T2) de la deuxième branche principale (16) de la cellule de commutation principale (T2) uniquement si la tension aux bornes de l'interrupteur principal de la deuxième branche de la cellule de commutation (Vsw2) principale est inférieure à une deuxième valeur seuil (Vsw2_th_l).

4. Système selon l'une quelconque des revendications précédentes, **caractérisé en ce que** les moyens de commande (12) sont configurés pour commander la fermeture de l'interrupteur secondaire (T4) de la deuxième branche secondaire (22) de la cellule d'aide à la commutation :

- si l'interrupteur principal (T2) de la deuxième branche principale (16) de la cellule de commutation principale est fermé et le courant d'aide à la commutation ($i_1$) est supérieur au premier seuil de courant (I1_th_pos), et
- si la tension aux bornes de l'interrupteur secondaire de la deuxième branche secondaire de la cellule d'aide à la commutation (Vsw1) est inférieure à une deuxième valeur seuil secondaire (Vsw1_th_l), ou bien l'interrupteur principal (T2) de la deuxième branche principale (16) de la cellule de commutation principale est fermé et le courant d'aide à la commutation ($i_1$) est supérieur au premier seuil de courant (I1_th_pos) pendant un délai prédéterminé,,

et pour commander l'ouverture de l'interrupteur secondaire de la deuxième branche secondaire (22) de la cellule d'aide à la commutation (T4) si l'interrupteur principal de la première branche principale (14) de la cellule de commutation principale (6) est fermé et le courant d'aide à la commutation ($i_1$) est inférieur au deuxième seuil de courant (i1_th_neg).

5. Système selon l'une quelconque des revendications précédentes, **caractérisé en ce que** la cellule d'aide à la commutation (10) comprend uniquement deux condensateurs de commutation (C1, C2).

6. Système selon l'une quelconque des revendications 1 à 4, **caractérisé en ce que** la cellule d'aide à la commutation (10) comprend quatre condensateurs de commutation respectivement disposés en parallèle de l'un des interrupteurs principaux (T1, T2) ou secondaires (T3, T4), chaque interrupteur (T1, T2, T3, T4) étant associé à un unique condensateur de commutation.

7. Système selon l'une quelconque des revendications précédentes, **caractérisé en ce qu'**il comprend en outre au moins trois capteurs de courant (13) raccordés aux moyens de commande (12), deux des capteurs de courant (13) étant respectivement disposés sur l'une et l'autre des branches secondaires (20, 22) et le troisième capteur de courant (13) étant disposé sur la première branche principale (14) de la cellule de commutation principale (T1).

8. Système selon l'une quelconque des revendications précédentes, **caractérisé en ce que** le filtre de sortie (8) comprend un condensateur de sortie (Cs) et la bobine (L2), la cellule de commutation principale (6) étant connectée entre la cellule d'aide à la commutation (10) et le filtre de sortie (8).

9. Système selon la revendication 8, **caractérisé en ce que** la cellule de commutation principale (6) et le filtre de sortie (8) forment un convertisseur abaisseur de tension.

10. Système selon la revendication 8, **caractérisé en ce qu'**il comprend en outre deux condensateurs (Ce1, Ce2) montés en série à l'entrée du système d'alimentation (4), le filtre de sortie (8) étant en outre connecté aux condensateurs (Ce1, Ce2), la cellule de commutation principale (6) et le filtre de sortie (8) formant un montage onduleur à demi-pont.

11. Système selon la revendication 8, **caractérisé en ce qu'**il comprend en outre une cellule d'aide à la commutation secondaire (10') et une cellule de commutation principale secondaire (6') connectée en cascade l'une de l'autre, la cellule d'aide à la commutation secondaire (10') et la cellule de commutation principale secondaire (6') étant identiques à la cellule d'aide à la commutation (10) et à la cellule de commutation principale (6) respectivement, le filtre de sortie (8), la cellule de commutation principale (6) et la cellule de commutation principale secondaire (6') formant un montage onduleur à pont complet.

**12.** Système selon l'une quelconque des revendications 1 à 7, **caractérisé en ce que** la cellule de commutation principale (6) est connectée en entrée à la bobine (L2) et en sortie à la cellule d'aide à la commutation (10), la bobine (L2) et la cellule de commutation principale (6) formant un convertisseur élévateur de tension.

**13.** Aéronef, **caractérisé en ce qu'**il comprend au moins un système d'alimentation électrique (4) selon l'une quelconque des revendications précédentes.

**Patentansprüche**

**1.** System zur elektrischen Versorgung, welches dafür bestimmt ist, am Eingang mit einer Quelle elektrischer Energie und am Ausgang mit einer Last verbunden zu sein, welches aufweist:

- eine Haupt-Schaltzelle (6), welche einen ersten Haupt-Zweig (14) und einen zweiten Haupt-Zweig (16) aufweist, welche jeweils einen Haupt-Unterbrecher (T1, T2) aufweisen, der zwischen einem Geöffnet-Zustand und einem Geschlossen-Zustand steuerbar ist, und
- eine Hilfs-Schaltzelle (10), die mit der Haupt-Schaltzelle (6) verbunden ist und aufweist einerseits einen ersten Sekundär-Zweig (20) und einen zweiten Sekundär-Zweig (22), welche jeweils einen Sekundär-Unterbrecher (T3, T4) aufweisen, der zwischen einem Geöffnet-Zustand und einem Geschlossen-Zustand steuerbar ist, und andererseits einen Verbindungs-Zweig (24) zum Verbinden der Hilfs-Schaltzelle (10) mit der Haupt-Schaltzelle (6), wobei der Verbindungs-Zweig (24) eine Schalt-Spule (L1) aufweist,

wobei die Haupt-Schaltzelle (6) und die Hilfs-Schaltzelle (10) kaskadenartig miteinander verbunden sind, wobei die Hilfs-Schaltzelle (10) ferner mindestens zwei Schalt-Kondensatoren (C1, C2) aufweist, wobei ein Schalt-Kondensator (C1) parallel zu dem einen der Sekundär-Unterbrecher (T3, T4) angeordnet ist und ein anderer Schalt-Kondensator (C2) parallel zu dem einen der Haupt-Unterbrecher (T1, T2) angeordnet ist, wobei das System zur elektrischen Versorgung ferner aufweist zwei Eingangsklemmen (E1, E2), zwei Ausgangsklemmen (S1, S2), ein Ausgangsfilter (8), das zwischen die Ausgangsklemmen (S1, S2) geschaltet ist, und eine Spule (L2), wobei die Spule (L2) in dem Ausgangsfilter (8) enthalten ist beziehungsweise mit der einen der Eingangsklemmen (E1, E2) und der Haupt-Schaltzelle (6) verbunden ist, wobei die Spule (L2) imstande ist, von einem Spulenstrom ($i_2$) durchlaufen zu werden, wobei das System zur Versorgung imstande ist, eine Eingangsspannung (Ve) zu empfangen und am Ausgang eine Ausgangsspannung (Vs) bereitzustellen, wobei das System zur Versorgung (4) ferner Mittel zum Steuern (12) aufweist, die imstande sind, das Öffnen und das Schließen der Haupt- (T1, T2) und Sekundär-Unterbrecher (T3, T4) zu steuern, zur Spannungsregelung des Systems zur Versorgung abhängig von der Eingangsspannung (Ve) oder von der Ausgangsspannung (Vs) beziehungsweise zur Stromregelung des Systems zur Versorgung abhängig von dem Spulenstrom ($i_2$), und wobei die Mittel zum Steuern (12) eingerichtet sind, um die Sekundär-Unterbrecher (T3, T4) gegenphasig zueinander zu steuern abhängig von einem Hilfs-Schalt-strom ($i_1$), welcher die Schalt-Spule (L1) durchläuft, von dem Zustand der Haupt-Unterbrecher (T1, T2) und von der Spannung an den Klemmen des Sekundär-Unterbrechers des zweiten Sekundär-Zweigs der Hilfs-Schaltzelle (Vsw1),
**dadurch gekennzeichnet, dass** die Mittel zum Steuern (12) eingerichtet sind, um das Schließen des Sekundär-Unterbrechers (T3) des ersten Sekundär-Zweigs (20) der Hilfs-Schaltzelle (T3) zu steuern:

- wenn der Haupt-Unterbrecher (T1) des ersten Haupt-Zweigs (14) der Haupt-Schaltzelle (6) geschlossen ist und der Hilfs-Schaltstrom ($i_1$) geringer ist als ein zweiter Strom-Schwellenwert (I1_th_neg) von negativem Wert, und
- wenn die Spannung an den Klemmen des Sekundär-Unterbrechers (T4) des zweiten Sekundär-Zweigs (22) der Hilfs-Schaltzelle (Vsw1) größer ist als ein erster Sekundär-Schwellenwert (Vsw1_th_h) beziehungsweise der Haupt-Unterbrecher (T1) des ersten Haupt-Zweigs (14) der Haupt-Schaltzelle (6) geschlossen ist und der Hilfs-Schaltstrom ($i_1$) geringer ist als der zweite Strom-Schwellenwert (I1_th_neg) während einer vorbestimmten Verzögerungszeit,

und um das Öffnen des Sekundär-Unterbrechers (T3) des ersten Sekundär-Zweigs (20) der Hilfs-Schaltzelle (10) zu steuern, wenn der Haupt-Unterbrecher (T2) des zweiten Haupt-Zweigs (16) der Haupt-Schaltzelle (6) geschlossen ist und der Hilfs-Schaltstrom ($i_1$) größer ist als ein erster Strom-Schwellenwert (I1_th_pos) von positivem Wert.

2. System gemäß Anspruch 1, **dadurch gekennzeichnet, dass** die Mittel zum Steuern (12) eingerichtet sind, um die Haupt-Unterbrecher (T1, T2) gegenphasig zueinander zu steuern, wobei die Haupt-Unterbrecher (T1, T2) geöffnet oder geschlossen gesteuert werden mittels der Mittel zum Steuern (12) gleichfalls abhängig von der Spannung an den Klemmen des Haupt-Unterbrechers des zweiten Haupt-Zweigs der Haupt-Schaltzelle (Vsw2).

3. System gemäß Anspruch 2, **dadurch gekennzeichnet, dass** die Mittel zum Steuern (12) eingerichtet sind, um:

- das Schließen des Haupt-Unterbrechers (T1) des ersten Haupt-Zweigs (14) der Haupt-Schaltzelle (6) nur dann zu steuern, wenn die Spannung an den Klemmen des Haupt-Unterbrechers des zweiten Zweigs (Vsw2) größer ist als ein erster Schwellenwert (Vsw2_th_h), und
- das Schließen des Haupt-Unterbrechers (T2) des zweiten Haupt-Zweigs (16) der Haupt-Schaltzelle (T2) nur dann zu steuern, wenn die Spannung an den Klemmen des Haupt-Unterbrechers des zweiten Zweigs der Haupt-Schaltzelle (Vsw2) geringer ist als ein zweiter Schwellenwert (Vsw2_th_l).

4. System gemäß irgendeinem der vorherigen Ansprüche, **dadurch gekennzeichnet, dass** die Mittel zum Steuern (12) eingerichtet sind, um das Schließen des Sekundär-Unterbrechers (T4) des zweiten Sekundär-Zweigs (22) der Hilfs-Schaltzelle zu steuern:

- wenn der Haupt-Unterbrecher (T2) des zweiten Haupt-Zweigs (16) der Haupt-Schaltzelle geschlossen ist und der Hilfs-Schaltstrom ($i_1$) größer ist als der erste Strom-Schwellenwert (I1_th_pos), und
- wenn die Spannung an den Klemmen des Sekundär-Unterbrechers des zweiten Sekundär-Zweigs der Hilfs-Schaltzelle (Vsw1) geringer ist als ein zweiter Sekundär-Schwellenwert (Vsw1_th_l) beziehungsweise der Haupt-Unterbrecher (T2) des zweiten Haupt-Zweigs (16) der Haupt-Schaltzelle geschlossen ist und der Hilfs-Schaltstrom ($i_1$) größer ist als der erste Strom-Schwellenwert (I1_th_pos) während einer vorbestimmten Verzögerungszeit,

und um das Öffnen des Sekundär-Unterbrechers des zweiten Sekundär-Zweigs (22) der Hilfs-Schaltzelle (T4) zu steuern, wenn der Haupt-Unterbrecher des ersten Haupt-Zweigs (14) der Haupt-Schaltzelle (6) geschlossen ist und der Hilfs-Schaltstrom ($i_1$) geringer ist als der zweite Strom-Schwellenwert (i1_th_neg).

5. System gemäß irgendeinem der vorherigen Ansprüche, **dadurch gekennzeichnet, dass** die Hilfs-Schaltzelle (10) genau zwei Schalt-Kondensatoren (C1, C2) aufweist.

6. System gemäß irgendeinem der Ansprüche 1 bis 4, **dadurch gekennzeichnet, dass** die Hilfs-Schaltzelle (10) vier Schalt-Kondensatoren aufweist, die jeweilig parallel zu dem einen der Haupt- (T1, T2) oder Sekundär-Unterbrecher (T3, T4) angeordnet sind, wobei jeder Unterbrecher (T1, T2, T3, T4) mit einem einzigen Schalt-Kondensator assoziiert ist.

7. System gemäß irgendeinem der vorherigen Ansprüche, **dadurch gekennzeichnet, dass** es ferner mindestens drei Strom-Sensoren (13) aufweist, die mit den Mitteln zum Steuern (12) verbunden sind, wobei zwei der Strom-Sensoren (13) entsprechend an dem einen und dem anderen der Sekundär-Zweige (20, 22) angeordnet sind und der dritte Strom-Sensor (13) an dem ersten Haupt-Zweig (14) der Haupt-Schaltzelle (T1) angeordnet ist.

8. System gemäß irgendeinem der vorherigen Ansprüche, **dadurch gekennzeichnet, dass** das Ausgangsfilter (8) einen Ausgangs-Kondensator (Cs) und die Spule (L2) aufweist, wobei die Haupt-Schaltzelle (6) zwischen die Hilfs-Schaltzelle (10) und das Ausgangsfilter (8) geschaltet ist.

9. System gemäß Anspruch 8, **dadurch gekennzeichnet, dass** die Haupt-Schaltzelle (6) und das Ausgangsfilter (8) einen Spannung-Absenken-Umwandler bilden.

10. System gemäß Anspruch 8, **dadurch gekennzeichnet, dass** es ferner zwei Kondensatoren (Ce1, Ce2) aufweist, die in Serie an dem Eingang des Systems zur Versorgung (4) montiert sind, wobei das Ausgangsfilter (8) ferner mit den Kondensatoren (Ce1, Ce2) verbunden ist, wobei die Haupt-Schaltzelle (6) und das Ausgangsfilter (6) einen Halbbrücken-Wechselrichter-Aufbau bilden.

11. System gemäß Anspruch 8, **dadurch gekennzeichnet, dass** es ferner eine Sekundär-Hilfs-Schaltzelle (10') und eine Sekundär-Haupt-Schaltzelle (6') aufweist, die kaskadenartig miteinander verbunden sind, wobei die Sekundär-Hilfs-Schaltzelle (10') und die Sekundär-Haupt-Schaltzelle (6') identisch zu der Hilfs-Schaltzelle (10) beziehungsweise zu der Haupt-Schaltzelle (6) sind, wobei das Ausgangsfilter (8), die Haupt-Schaltzelle (6) und die Sekundär-Haupt-Schaltzelle (6') einen Vollbrücken-Wechselrichter-Aufbau bilden.

12. System gemäß irgendeinem der Ansprüche 1 bis 7, **dadurch gekennzeichnet, dass** die Haupt-Schaltzelle (6) am Eingang mit der Spule (L2) und am Ausgang mit der Hilfs-Schaltzelle (10) verbunden ist, wobei die Spule (L2) und die Haupt-Schaltzelle (6) einen Spannung-Anheben-Umwandler bilden.

13. Luftfahrzeug, **dadurch gekennzeichnet, dass** es mindestens ein System zur elektrischen Versorgung (4) gemäß irgendeinem der vorherigen Ansprüche aufweist.

**Claims**

1. An electric power supply system intended to be connected at the input to an electric power source and at the output to a load, comprising:

   - a main switching cell (6) comprising a first main branch (14) and a second main branch (16) each including a main switch (T1, T2) which is controllable between an open state and a closed state, and
   - an auxiliary switching cell (10) connected to the main switching cell (6) and comprising a first secondary branch (20) and a second secondary branch (22) each including a secondary switch (T3, T4) controllable between an open state and a closed state on the one hand, and a connection branch (24) for connecting the auxiliary switching cell (10) to the main switching cell (6), the connection branch (24) including a switching inductor (L1), on the other hand,

   the main switching cell (6) and the auxiliary switching cell (10) being connected, cascaded from each other, the auxiliary switching cell (10) further comprises at least two switching capacitors (C1, C2), a switching capacitor (C1) being positioned to parallel to one of the secondary switches (T3, T4) and another switching capacitor (C2) being positioned parallel to one of the main switches (T1, T2), the electric power supply system further comprising two input terminals (E1, E2), two output terminals (S2, S2), an output filter (8) connected between the output terminals (S1, S2) and an inductor (L2), the inductor (L2) being comprised in the output filter (8) or else connected to one of the input terminals (E1, E2) and to the main switching cell (6), said inductor (L2) being capable of being passed through by an inductor current ($i_2$), the power supply system being capable of receiving an input voltage (Ve) and of providing at the output an output voltage (Vs), the power supply system (4) further comprising control means (12) able to control the opening and the closing of the main switches (T1, T2) and secondary main switches (T3, T4) for voltage-controlling the power supply system according to the input voltage (Ve) or to the output voltage (Vs), or else current-controlling the power supply system according to the inductor current ($i_2$), and the control means (12) being configured to control the secondary switches (T3, T4) with opposite phases in relation to each other depending on an auxiliary switching current ($i_1$) passing through the switching inductor (L1), to the state of the main switches (T1, T2) and to the voltage on the terminals of the secondary switch of the second secondary branch of the auxiliary switching cell (Vsw1), **characterized in that** that the control means (12) are configured for controlling the closing of the secondary switch (T3) of the first secondary branch (20) of the auxiliary switching cell (T3):

   - if the main switch (T1) of the first main branch (14) of the main switching cell (6) is closed and the auxiliary switching current ($i_1$) is less than a second current threshold (I1_th_neg) of negative value, and
   - if the voltage on the terminals of the secondary switch (T4) of the second secondary branch (22) of the auxiliary switching cell (Vsw1) is greater than a first secondary threshold value (Vsw1_th_h), or else the main switch (T1) of the first main branch (14) of the main switching cell (6) is closed and the auxiliary switching current ($i_1$) is less than the second threshold current (I1_th_neg) for a predetermined time,

   and for controlling the opening of the secondary switch (T3) of the first secondary branch (20) of the auxiliary switching cell (10) if the main switch (T2) of the second main branch (16) of the main switching cell (6) is closed and the auxiliary switching current ($i_1$) is greater than a first current threshold (I1_th_pos) of positive value.

2. The system according to claim 1, **characterized in that** the control means (12) are configured for controlling the main switches (T1, T2) with opposite phases in relation to each other, the main switches (T1, T2) being controlled to be open or closed by the control means (12) also depending on the voltage on the terminals of the main switch of the second main branch of the main switching cell (Vsw2).

3. The system according to claim 2, **characterized in that** the control means (12) are configured for:

- controlling the closing of the main switch (T1) of the first main branch (14) of the main switching cell (6) only if the voltage on the terminals of the main switch of the second branch (Vsw2) is greater than a first threshold value (Vsw2_th_h), and
- controlling the closing of the main switch (T2) of the second main branch (16) of the main switching cell (T2) only if the voltage on the terminals of the main switch on the second branch of the main switching cell (Vsw2) is less than a second threshold value (Vsw2_th_l).

4. The system according to any of the preceding claims, **characterized in that** the control means (12) are configured for controlling the closing of the secondary switch (T4) of the second secondary branch (22) of the auxiliary switching cell:

- if the main switch (T2) of the second main branch (16) of the main switching cell is closed and the auxiliary switching current ($i_1$) is greater than the first current threshold (I1_th_pos), and
- if the voltage on the terminals of the secondary switch of the second secondary branch of the auxiliary switching cell (Vsw1) is less than a second secondary threshold value (Vsw1_th_l), or else the main switch (T2) of the second main branch (16) of the main switching cell is closed and the auxiliary switching current ($i_1$) is greater than the first current threshold (I1_th_pos) for a predetermined time,

and for controlling the opening of the secondary switch of the second secondary branchy (22) of the auxiliary switching cell (T4) if the main switch of the first main branch (14) of the main switching cell (6) is closed and the auxiliary switching current ($i_1$) is less than the second current threshold (i1_th_neg).

5. The system according to any of the preceding claims, **characterized in that** the auxiliary switching cell (10) only comprises two switching capacitors (C1, C2).

6. The system according to any of claims 1 to 4, **characterized in that** the auxiliary switching cell (10) comprises the four switching capacitors respectively positioned parallel to one of the main switches (T1, T2) or secondary switches (T3, T4), each switch (T1, T2, T3, T4) being associated with a single switching capacitor.

7. The system according to any of the preceding claims, **characterized in that** it further comprises at least three current sensors (13) connected to the control means (12), two of the current sensors (13) being respectively positioned on one and on the other of the secondary branches (20, 22) and the third current sensor (13) being positioned on the first main branch (14) of the main switching cell (T1).

8. The system according to any of the preceding claims, **characterized in that** the output filter (8) comprises an output capacitor (Cs) and the inductor (L2), the main switching cell (6) being connected between the auxiliary switching cell (10) and the output filter (8).

9. The system according to claim 8, **characterized in that** the main switching cell (6) and the output filter (8) form a voltage step-down converter.

10. The system according to claim 8, **characterized in that** it further comprises two capacitors (Ce1, Ce2) mounted in series at the input of the power supply system (4), the output filter (8) being further connected to the capacitors (Ce1, Ce2), the main switching cell (6) and the output filter (8) forming a half-bridge inverter circuit.

11. The system according to claim 8, **characterized in that** it further comprises a secondary auxiliary switching cell (10') and a secondary main switching cell (6') connected, cascaded from each other, the secondary auxiliary switching cell (10') and the secondary main switching cell (6') being identical with the auxiliary switching cell (10) and with the main switching cell (6) respectively, the output filter (8), the main switching cell (6) and the secondary main switching cell (6') forming a full-bridge inverter circuit.

12. The system according to any of claims 1 to 7, **characterized in that** the main switching cell (6) is connected at the input to the inductor (L2) and at the output to the auxiliary switching cell (10), the inductor (L2) and the main switching cell (6) forming a voltage step-up converter.

13. An aircraft, **characterized in that** it comprises at least one electric power supply system (4) according to any of the preceding claims.

3

4

2

5

5

<u>FIG.1</u>

# FIG.2

FIG.3

FIG.4

EP 2 747 266 B1

FIG.5

FIG.6

FIG.7

FIG.8

FIG.9

FIG.10

FIG.11

FIG.12

FIG.13

FIG.14

FIG.16

FIG.17

EP 2 747 266 B1

## RÉFÉRENCES CITÉES DANS LA DESCRIPTION

**Documents brevets cités dans la description**

- US 5568368 A
- US 5594635 A